Europäisches Patentamt

European Patent Office

Office européen des brevets

(11) Numéro de publication: **0 106 750**
**A1**

(12) **DEMANDE DE BREVET EUROPEEN**

(21) Numéro de dépôt: 83401924.2

(22) Date de dépôt: 30.09.83

(51) Int. Cl.³: **B 32 B 3/28**
**B 32 B 7/04, B 60 R 13/02**

(30) Priorité: 01.10.82 FR 8216554

(43) Date de publication de la demande:
25.04.84 Bulletin 84/17

(84) Etats contractants désignés:
DE GB IT

(71) Demandeur: SOCIETE INTERNATIONALE DE
REVETEMENTS DE SOL (S.I.R.S.) Société Anonyme dite:
4 rue Benjamin Constant
F-92521 Neuilly sur Seine(FR)

(72) Inventeur: Budynek, André
26, Rue du Bel
F-76880 Arques la Bataille(FR)

(74) Mandataire: Lerner, François
5, rue Jules Lefebvre
F-75009 Paris(FR)

(54) Procédé de fixation d'un panneau d'habillage sur un panneau support et panneau composite obtenu selon ce procédé.

(57) L'invention concerne un procédé de fixation d'un panneau d'habillage sur un panneau support ainsi que les panneaux composites obtenus par application de ce procédé.

Selon l'invention le panneau d'habillage 1 est solidaire du panneau support 2 au moyen d'une couche intermédiaire souple 3 autorisant et absorbant les déformations différentielles entre les deux panneaux.

L'invention s'applique notamment à la fabrication de pavillons pour toit de voiture.

FIG_1

EP 0 106 750 A1

Croydon Printing Company Ltd.

"Procédé de fixation d'un panneau d'habillage sur un panneau support et panneau composite obtenu selon ce procédé"

La présente invention a pour objet un procédé de fixation d'un panneau d'habillage sur un panneau support et se rapporte au panneau composite obtenu selon ce procédé.

Pour de nombreuses applications on est amené à fixer un panneau d'habillage : panneau d'aspect, panneau d'isolation acoustique et/ou phonique, sur la surface d'un panneau support. Tel est le cas notamment dans le bâtiment pour habiller ou isoler des surfaces de murs et/ou de plafonds, dans l'industrie automobile pour habiller la surface intérieure du toit ou pavillon d'un véhicule, dans l'industrie ferroviaire pour habiller les parois intérieures et notamment de plafonds des voitures, etc...

Pour la réalisation de tels habillages, se posent les problèmes habituels et généraux de l'industrie , à savoir : possibilité de fabrication en série et à faible prix des habillages, fiabilité et efficacité des constructions , résistance dans le temps notamment dans des conditions d'utilisation difficiles (brusques variations de température et vibrations).

L'invention concerne précisément un procédé nouveau permettant de réaliser de tels habillages, de fabrication nettement plus économique que les procédés connus à ce jour et permettant d'obtenir des panneaux de meilleure qualité (meilleure isolation thermique et phonique) pouvant résister particulièrement bien à des conditions défavorables d'usage telles qu'il s'en présente dans l'industrie automobile, le pavillon d'un véhicule étant soumis à de forts écarts de température et à des vibrations importantes. Il est à noter que des problèmes de fixation se posent de façon d'autant plus aiguë que le panneau d'habillage et le panneau support étant de natures différentes sont soumis à des déformations différentielles importantes.

Conformément à l'invention, le procédé de fixation d'un panneau d'habillage sur un panneau support se caractérise en ce qu'on solidarise le panneau d'habillage au panneau support par une couche intermédiaire souple autorisant et absorbant les déformations différentielles tout en assurant la fixation des panneaux selon des points ou les lignes de contact séparés en nombre et de longueurs suffisants pour obtenir une bonne jonction de ladite couche intermédiaire avec chacun des panneaux . Avantageusement on utilise comme couche intermédiaire précitée essentiellement une feuille mince ondulée gaufrée ou crêpée.

Lorsqu'on procède de cette façon, on constate que le panneau d'habillage peut être parfaitement solidarisé, par exemple par collage, au panneau support, la feuille intermédiaire souple permettant des dilatations différentielles et absorbant les déformations et vibrations relatives entre le panneau d'habillage et le panneau support.

Selon une autre caractéristique importante du procédé, on renforce au moins localement contre l'écrasement et au moins sur une de ses faces les ondulations, gaufrages ou crépages de la feuille en les remplissant au moins partiellement avec un produit relativement souple et élastique tel que du polyéthylène. De cette façon on facilite l'application par collage sous pression de la feuille souple intermédiaire sur le panneau d'habillage et sur le panneau support permettant à cette feuille en conservant son aspect essentiel ondulé, gaufré ou crêpé initial de jouer son rôle d'amortisseur et d'absorption des déformations différentielles auxquelles sont soumis le panneau d'habillage et le panneau support.

L'invention vise également des produits composites formés de la jonction de deux panneaux de caractéristiques mécaniques et notamment de déformations différentes obtenus selon le procédé susmentionné comprenant au moins un premier panneau d'habillage, au moins un second panneau support et au moins une couche intermédiaire souple autorisant et absorbant les déformations différentielles fixée localement sur chacune de des faces en divers points et/ou lignes espacés à chacun desdits panneaux en regard.

L'invention apparaîtra plus clairement à l'aide de la description qui va suivre faite en référence aux dessins annexés montrant uniquement à titre d'exemple un modèle de mise en oeuvre de l'invention. Dans ces dessins :

- la figure 1 montre en coupe de façon schématique un panneau composite obtenu selon l'invention,

- la figure 2 montre schématiquement en coupe à plus grande échelle une phase de fabrication du panneau,

- la figure 3 montre comme la figure 2 une phase suivante de fabrication,

- la figure 4 montre à plus grande échelle au niveau du cercle entouré IV dans la figure 1 le détail de la jonction réalisée.

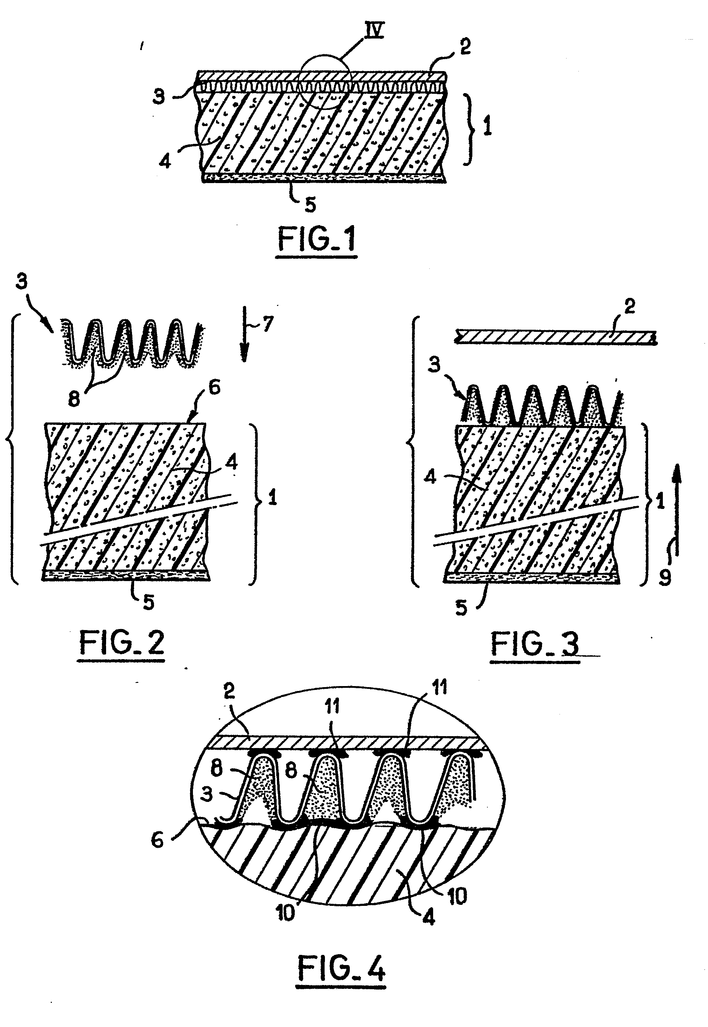

En se reportant tout d'abord à la figure 1 on aperçoit

3

un panneau composite constitué de la liaison d'un panneau d'habillage 1 à un panneau support 2, la liaison étant réalisée au moyen d'une couche intermédiaire 3. Dans l'exemple illustré correspondant à l'habillage d'un toit de véhicule automobile, le panneau d'habillage 1 est formé d'un panneau d'insonorisation 4 par exemple en polycarbonate et ABS à structure alvéolaire revêtu d'une couche d'habillage tel qu'un tissu 5. Le panneau support 2 est dans ce cas habituellement formé d'une tôle métallique d'acier. Exemplairement l'épaisseur du panneau 4 peut être de l'orde de quatre millimètres pour un poids de 800 grammes au mètre carré. Evidemment,les coefficients de déformation et notamment de dilatation thermique du panneau d'habillage 1 et de la tôle support 2 sont très différents . La couche intermédiaire 3 permet la jonctiondu panneau 1 sous le panneau 2 et absorbera si - multanément les déformations différentielles des deux panneaux.

Dans l'exemple illustré et comme il apparaîtra plus clairement à l'aide de la description des figures 2 à 4, la couche intermédiaire 3 est formée essentiellement d'une feuille mince, par exemple de papier Kraft ondulé dont les crêtes sont fixées par collage d'un côté au panneau d'habillage 1 et de l'autre à la tôle 2. On se reportera aux figures 2 à 4 illustrant comment peut être réalisé le collage.

Faisant tout d'abord référence à la figure 2, on applique sur la face 6 du panneau 1 (opposéeà la face d'aspect 5) la feuille intermédiaire 3 formée dans l'exemple illustré d'un papier Kraft ondulé. L'application se fait au moyen d'une pression dirigée selon la flèche 7 et au moyen d'une colle appliquée sur la face 6 et/ou sur la face en regard de la feuille ondulée 3. Selon les caractéristiques importantes du procédé de façon à éviter que lors de cette application la feuille mince de papier ondulé ne soit écrasée de sorte que les ondulations ne pourraient plus jouer leur rôle de jonction souple intermédiaire entre le panneau support 2 et le panneau d'habillage 1, on a au préalable enduit la feuille 3 sur au moins une de ses faces au moyen d'un matériau souple élastique tel par exemple que du polyéthylène qui, comme il apparaît en 8 vient remplir et obturer au moins en partie les creux formés entre deux ondulations adjacentes sur cette face de la feuille 3.

Dans un exemple type d'application, la feuille de papier kraft étant de qualité 90 grammes par mètre carré, les ondulations peuvent avoir une hauteur de 6 à 8 dixièmes de millimètre , le pas des ondulations peut être de 4 à 8 dixièmes de millimètre, et l'on effectuera une enduction de polyéthylène à raison de 50 à 60 grammes par mètre carré. La colle utilisée pour réaliser la jonction est une colle classique compatible évidemment avec le polyéthylène et la nature de la face 6 du panneau d'habillage 1. Avantageusement le polyéthylène sera un polyéthylène de type basse température, ce qui lui conférera une grande souplesse aux températures supérieures à la température ambiante permettant à la couche intermédiaire 3 de conserver toute sa souplesse. La jonction par collage de la feuille 3 au panneau 1 se fera normalement à froid.

La jonction étant ainsi réalisée, on vient appliquer comme illustré à la figure 3 par la flèche 9 le panneau d'habillage 1 sur lequel est collée la feuille intermédiaire ondulée 3 sous la surface de la tôle 2, la jonction étant réalisée au moyen d'une colle compatible classique préalablement enduite sous la face de la tôle 2 et sur la surface des ondulations en regard de la feuille 3.

Comme il apparaît à la figure 4 la jonction entre la tôle 2 et la face 6 de la plaque 4 est ainsi réalisée par des points ou lignes de collage respectivement 10 réunissant la feuille ondulée 3 et la face 6 et des points ou lignes de collage 11 réunissant la feuille 3 à la tôle 2. Les points et lignes de collage sont situés au voisinage des crêtes en regard du panneau d'habillage ou du panneau support respectivement.

Le procédé peut être mis en oeuvre avec une couche intermédiaire ondulée selon des lignes droites, courbes ouvertes ou fermées. La couche intermédiaire peut également aussi bien être gaufrée, crêpée ou plissée, l'essentiel étant qu'elle présente de nombreux points ou lignes faisant saillies sur chacune de ses faces selon deux surfaces sur lesquelles s'effectueront les jonctions avec le panneau support et le panneau d'habillage respectivement, lesdites surfaces étant distantes l'une de l'autre de quelques dixièmes de millimètre à quelques millimètres selon l'application du panneau composite, ses dimensions, sa nature et son poids unitaire.

Bien entendu la nature des matériaux peut varier considérablement selon les usages. Par exemple dans l'industrie automobile ou ferroviaire le panneau support sera en général une tôle métallique, tandis que le panneau d'habillage sera un panneau plastique composite. Dans le bâtiment, le panneau support sera fréquemment un béton, tandis que la nature du panneau d'habillage pourra être très diverse selon la destination du bâtiment.

6
REVENDICATIONS

1. Procédé de fixation d'un panneau d'habillage, ayant une épaisseur notable, d'au moins quelques millimètres, sur un panneau support, lesdits panneaux de nature différente pouvant être soumis à des déformations différentielles, ledit procédé étant caractérisé en ce qu'on solidarise le panneau d'habillage (1) au panneau support (2) par une couche intermédiaire souple (3) autorisant et absorbant les déformations différentielles tout en assurant la fixation des panneaux selon des points ou lignes de contact séparés en nombre et de longueurs suffisants pour obtenir une bonne jonction de ladite couche intermédiaire (3) avec chacun des panneaux (1, 2).

2. Procédé selon la revendication 1, caractérisé en ce qu'on utilise comme couche intermédiaire précitée (3) essentiellement une feuille mince ondulée, gaufrée ou crêpée.

3. Procédé selon la revendication 2, caractérisé en ce qu'on renforce au moins localement contre l'écrasement et au moins sur une de ses faces les ondulations, gaufrage ou crêpage de la feuille en les remplissant au moins partiellement avec un produit relativement souple et élastique.

4. Produit composite formé de la jonction de deux panneaux de caractéristiques mécaniques et notamment de déformations différentes obtenues selon le procédé de l'une quelconque des revendications précédentes, caractérisé en ce qu'il comprend :

- au moins un premier panneau d'habillage (1) ayant une épaisseur notable, d'au moins quelques millimètres,
- au moins un deuxième panneau support (2),
- et au moins une couche intermédiaire souple (3) autorisant et absorbant les déformations diffférentielles, fixée localement sur chacune de ses faces en divers points et/ou lignes espacés à chacun desdits panneaux en regard,

5. Produit selon la revendication 4, caractérisé en ce que ladite couche (3) est formée d'une feuille mince souple ondulée dont les sommets des ondulations sont collés ou soudés aux lignes en regard desdits panneaux.

6. Produit selon la revendication 5, caractérisé en ce que les creux des ondulations sont remplis au moins partiellement et au moins d'un côté d'un matériau souple.

7. Produit selon la revendication 5 ou la revendication 6, caractérisé en ce que ladite feuille est une feuille de papier kraft crêpé ou analogue.

8. Produit selon la revendication 7, caractérisé en ce que ladite feuille est imprégnée d'une résine telle que polyéthylène.

9. Produit selon la revendication 7 ou la revendication 8, caractérisé en ce que le papier kraft présente une hauteur d'ondulation de l'ordre de 6 à 8 dixièmes de millimètre et une largeur d'ondulation de l'ordre de 4 à 8 dixièmes de millimètre.

10. Produit selon les revendications 8 et 9, caractérisé en ce que l'enduction sur une face se fait à raison de 50 à 60 grammes de polyéthylène par mètre carré.

11. A titre d'application du produit selon l'une des revendications 4 à 10, des pavillons de voitures comportant une couche d'habillage isolante fixée sous la tôle du toit au moyen d'une couche intermédiaire de papier ou autre support mince, ondulé ou gaufré.

1/1

0106750

FIG_1

FIG_2

FIG_3

FIG_4

**Office européen des brevets**

**RAPPORT DE RECHERCHE EUROPEENNE**

Numéro de la demande

**0106750**

EP 83 40 1924

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| X | US-A-2 229 743 (H.C. KARCHER)<br><br>* Revendications 1-3; page 1, colonne de gauche, ligne 37 - colonne de droite, ligne 24; page 3, colonne de gauche, ligne 10 - page 4, colonne de gauche, ligne 39; page 5, colonne de gauche, lignes 1-18; figures 2-5 *<br><br>--- | 1,2,4, 5,7 | B 32 B 3/28<br>B 32 B 7/04<br>B 60 R 13/02 |
| A | US-A-4 227 356 (E.P. STERN et al.)<br>* Revendications 1,2,7,8; colonne 2, lignes 8-28; colonne 3, ligne 44 - colonne 4, ligne 48; exemple 1; figures 1-3 *<br><br>--- | 1-7 | |
| A | FR-A-2 310 871 (NISSAN MOTOR)<br><br>* Revendications 1,4,5,10; page 1, ligne 8 - page 5, ligne 19; page 7, lignes 22-35; figures 3,5,6 *<br><br>--- | 7,8,10 ,11 | **DOMAINES TECHNIQUES RECHERCHES (Int. Cl. ³)**<br><br><br><br>B 32 B<br>B 60 R |
| A | GB-A- 531 059 (ARDOR ENGINEERING)<br>* Revendications 1,3; page 2, ligne 7 - page 3, ligne 34 *<br><br>----- | 1,2,4, 5,7,11 | |

Le présent rapport de recherche a été établi pour toutes les revendications

| Lieu de la recherche<br>LA HAYE | Date d'achèvement de la recherche<br>22-12-1983 | Examinateur<br>BLASBAND I. |
|---|---|---|